# EUROPÄISCHE PATENTSCHRIFT

(11) **EP 3 288 869 B1**
(45) Veröffentlichungstag und Bekanntmachung des Hinweises auf die Patenterteilung: **25.09.2019**
(21) Anmeldenummer: 16721764.5
(22) Anmeldetag: 02.05.2016
(51) Int. Cl.: B65G 47/88

(54) **TRANSPORTEUR MIT VERKIPPBAREM STEG**
TRANSPORTER HAVING A TILTABLE WEB
TRANSPORTEUR À LAMELLE BASCULANTE

(30) Priorität: 30.04.2015 DE 102015005508
(43) Veröffentlichungstag der Anmeldung: 07.03.2018
(73) Patentinhaber: Heuft Systemtechnik GmbH, 56659 Burgbrohl (DE)
(72) Erfinder: HEUFT, Bernhard, 56659 Burgbrohl (DE)
(74) Vertreter: Gritschneder, Sebastian
(86) Internationale Anmeldenummer: PCT/EP2016/059797
(87) Internationale Veröffentlichungsnummer: WO 2016/174273

(56) Entgegenhaltungen:
- EP-A1- 0 780 326
- EP-A1- 2 581 331
- EP-A1- 2 765 098
- WO-A1-88/07969
- WO-A1-2006/098726
- DE-A1- 2 218 405
- DE-U1- 8 701 772
- US-A- 2 096 772
- US-A- 5 685 414

## Beschreibung

Die vorliegende Anmeldung betrifft eine Vorrichtung und ein Verfahren zum Transport von stehenden Objekten, wie Behältern, Flaschen, Gebinden, Packstücken auf Transportvorrichtungen die in Flaschenabfüllanlagen eingesetzt werden. Die Transportvorrichtung umfasst eine Transporteinrichtung sowie mindestens einen Steg, und eine Hubeinrichtung mit der die relative Verkippung des Stegs gegenüber der Transporteinrichtung verändert werden kann.

Aus der DE-A1-198 16 960 bekannt, Gliederkettenförderer mit heb- und senkbaren Bremselementen auszustatten, um zu befördernde Objekte selektiv stillzusetzen. Die Bremselemente sind dabei vorzugsweise parallel zur Transportrichtung angeordnet und können über ein geeignetes hydraulisches oder pneumatisches System parallel zur Transportrichtung und über diese hinweg angehoben werden. Die Länge der Bremselemente entspricht im Wesentlichen der Länge einzelner Objekte. Mit den Bremselementen können daher einzelne Objekte von der Transportoberfläche des Förderers abgehoben werden, so dass dieses von dem weiterlaufenden Förderer nicht mehr weitertransportiert wird.

Aus der DE-A1-43 30 235 ist eine Transportvorrichtung bekannt, bei der beiderseits eines kontinuierlichen Transporteurs Hubeinheiten vorgesehen sind, mit denen Bremsleisten, die in Längsrichtung der Förderbahn ausgerichtet sind, über die Auflageebene der Förderbahn anhebbar sind. Die Leisten bilden dabei eine schiefe Ebene, durch die die transportierten Packstücke von der Förderbahn abgehoben werden können. Wiederum entspricht die Länge der Leisten im Wesentlichen der Länge einzelner Objekte. Mehrere Hubeinheiten können hintereinander angeordnet werden, um ein staudruckloses Anhalten mehrerer Packgüter zu ermöglichen.

Das Dokument US-A1-5 685 414 offenbart eine Vorrichtung zum Transportieren von stehenden Objekten nach dem Oberbegriff des Anspruchs 1.

Aufgabe der vorliegenden Erfindung ist es, die Versatilität und Wirtschaftlichkeit von Transportvorrichtungen zu erhöhen, insbesondere eine Möglichkeit zu schaffen, den Behälterfluss besser kontrollieren und steuern zu können, und dabei gleichzeitig Reibungsverluste beim Transport zu reduzieren.

Gelöst wird diese Aufgabe bei der Vorrichtung der eingangs genannten Art durch die Merkmale gemäß Anspruch 1.

Die Vorrichtung zum Transportieren von stehenden Objekten, wie Behältern, Flaschen, Gebinden, Packstücken, umfasst mindestens eine Transporteinrichtung, die eine erste Fördergeschwindigkeit aufweist und eine Transportebene für den stehenden Transport der Objekte definiert. Die Vorrichtung umfasst ferner mindestens einen Steg, der in Transportrichtung parallel zur Transporteinrichtung angeordnet sind. Die Oberseite des Stegs definiert dabei eine Unterstützungsebene. Die Länge des Stegs entspricht mindestens dem Doppelten des Querschnitts der zu transportierenden Objekte. Eine Hubeinrichtung ist vorgesehen mit der die Verkippung der Unterstützungsebene des Stegs gegenüber der Transportebene der mindestens einen Transporteinrichtung verändert werden kann. Die Hubeinrichtung ermöglicht eine stufenlose Verkippung des Stegs und/oder Transporteinrichtung, so dass die horizontale Position der Schnittlinie zwischen der Unterstützungsebene und der Transportebene stufenlos einstellbar ist.

Objekte im Sinne der vorliegenden Erfindung können dabei Behälter, wie Glasflaschen, Plastikflaschen, Container, Dosen, Gebinde, oder andere Packstücke sein. Üblicherweise sind diese Behälter im Wesentlichen rotationssymmetrisch und weisen eine kreisförmige Standfläche auf. Die Länge der Stege beträgt dann mindestens das Doppelte des Durchmessers der kreisförmigen Standfläche der Behälter dar. Die Objekte können aber auch nicht-rotationssymmetrische Behälter sein, die eine beliebige nicht-kreisförmige Standfläche aufweisen. In diesem Fall muss die Länge der Stege ein Vielfaches des größten Durchmessers der Standfläche der Behälter aufweisen.

Der Begriff Transporteinrichtungen, wie er hierin verwendet wird, umfasst jegliche Art von typischerweise beim stehenden Transport von den oben angegebenen Objekten verwendeten Transporteuren. Um einen stehenden Transport von Objekten zu ermöglichen, und um zu vermeiden, dass die Objekte beim Transport umfallen, müssen die Transporteure eine im Wesentlichen geschlossene Transportfläche bilden auf denen die Objekte ausreichend sicher Stehen können. Flaschen oder Dosen werden vorzugsweise auf endlosen Gliederkettenförderern oder Transportbändern transportiert, die über Umlenkrollen motorisch angetrieben werden und sowohl geradlinig als auch kurvengängig ausgeführt sein können. Die vorliegende Erfindung ist aber nicht auf die Verwendung bei Gliederkettenförderern oder Transportbändern beschränkt.

Herkömmlich verwendete Gliederketten werden über Gleitflächen der Rahmenkonstruktion gezogen. Um die dabei entstehenden Reibungsverluste zu minimieren, werden je nach Anwendung spezielle Schmiermittel eingesetzt. Die Verwendung von Schmiermittel stellt aber einen erhöhten Wartungsaufwand dar. Gemäß einem Aspekt der vorliegenden Erfindung können die einzelnen Glieder der verwendeten Gliederketten Rollen aufweisen, auf denen die Gliederketten über Bahnen in der Rahmenkonstruktion der Transportvorrichtung abrollen können. Um ein seitliches Verrutschen der Gliederketten zu verhindern, sind zwischen den Bahnen vorzugsweise Trennwände vorgesehen. Die Glieder der Gliederkette können zudem seitliche Rollen aufweisen, mit denen sie an den seitlichen Trennwänden abrollen können. Durch die Verwendung von Rollen können die Reibungsverluste von Transporteinrichtungen zusätzlich reduziert werden.

In einer einfachen Ausführungsform kann eine erfindungsgemäße Transportvorrichtung zum Beispiel aus einer Transporteinrichtung und zwei beiderseits der Transporteinrichtung parallel angeordneten Stegen bestehen. Die Transportvorrichtung kann grundsätzlich aus beliebig vielen parallel angeordneten Transporteinrichtungen und Stegen bestehen. Vorzugsweise sind die Transporteinrichtungen und Stege in abwechselnder Reihenfolge quer zur Transportrichtung angeordnet. Vorzugsweise verlaufen die Transporteinrichtungen dabei geradlinig. Es ist aber auch möglich, die vorliegende Erfindung bei kurvenförmig verlaufenden Transporteinrichtungen einzusetzen.

Grundsätzlich können sowohl die Transporteinrichtungen als auch die Stege mit Hubeinrichtungen zur Einstellung der Verkippung und/oder der vertikalen Position versehen sein. Aufgrund der einfacheren Bauart, bietet es sich aber an lediglich die Stege mit Hubeinrichtungen zu versehen. Die Transporteinrichtungen definieren dabei vorzugsweise eine Transportebene, auf der die Objekte im Normalbetrieb mit einer vorbestimmten und gegebenenfalls einstellbaren Fördergeschwindigkeit gefördert werden. Die Fördergeschwindigkeit aller Transporteinrichtungen kann dabei entweder jeweils identisch sein. Alternativ können die einzelnen Transporteinrichtungen jeweils mit einer individuell einstellbaren Geschwindigkeit betrieben werden.

Bei umlaufenden Transporteinrichtungen wie Transportbändern oder Gliederkettenförderern können die einzelnen Transportbänder mit konventionellen Antriebseinrichtungen, wie Servomotoren oder anderen Elektromotoren ausgestattet sein. Die Transporteinrichtungen können zudem miteinander gekoppelt sein, so dass ein Motor mehrere Transporteinrichtungen gleichzeitig antreibt. Um die Transportbänder individuell anzusteuern, muss jedes Band mit einem eigenen Antrieb versehen sein. Besonders vorteilhaft können in diesem Zusammenhang elektrische Nabenmotoren eingesetzt werden. Solche Motoren können in die Umlenkrollen der einzelnen Transportbänder integriert werden und beanspruchen daher keinen zusätzlichen Platzbedarf. Insbesondere bei Transporteinrichtungen mit vielen parallel angeordneten umlaufenden Transportbändern verteilt sich die nötige Antriebsleistung auf viele der Nabenmotoren, so dass die Leistungsanforderungen an jeden einzelnen der Nabenmotoren geringer sind. Nabenmotoren, die mit einer Spannung von unter 50 V, z. B. 48 V betrieben werden, reichen daher aus, um die benötigte Antriebsleistung bereitzustellen. Solche Nabenmotoren haben dann zusätzlich den Vorteil, dass aufgrund dieser geringen Spannungen die Betriebssicherheit für das Bedienpersonal erhöht wird. Durch berstende Flaschen kommt es bei Transportvorrichtungen häufig zu Flüssigkeitsaustritten, die bei der Verwendung von Hochspannungsmotoren immer auch ein Sicherheitsrisiko für das Wartungspersonal darstellen.

Die mindestens eine Hubeinrichtung kann beliebige dem Fachmann bekannte Stellelemente oder Stellglieder aufweisen, über die die Höhe der Stege und/oder Transporteinrichtungen steuerbar ist. Vorzugsweise können hierbei mechanische, elektromotorische, magnetische, pneumatische oder hydraulische Stellelemente verwendet werden. Eine Hubeinrichtung kann dabei beliebig viele Stellelemente aufweisen, die über die Länge der Transporteinrichtung verteilt angeordnet sein können. Vorzugsweise sind die Stellelemente einzeln ansteuerbar, so dass die Höhe der Transporteinrichtung abschnittsweise veränderbar ist. Weiter vorzugsweise ist zumindest abschnittsweise ein Winkel in Transportrichtung zwischen der Transportoberfläche und der durch die Stege definierten Unterstützungsebene einstellbar. Die Objekte werden dadurch gleichsam auf eine schiefe Ebene hinauf geschoben, wodurch sie zusätzlich abgebremst werden.

Vorzugsweise werden die Stege oder Transporteinrichtungen von mindestens zwei Stellgliedern gesteuert, so dass gleichzeitig eine Höhenveränderung und ein Verkippen der jeweiligen Elemente in Transportrichtung möglich ist. Zusätzlich kann die Hubeinrichtung auch so ausgeführt sein, dass ein Verkippen der Unterstützungsebene quer zur Transportrichtung ermöglicht wird. Die Stege können hierzu zum Beispiel Gruppenweise über insgesamt vier Stellelemente angesteuert werden, wobei beidseits der Transporteinrichtung und jeweils am vorderen und hinteren Ende je ein Stellelement vorgesehen ist. Durch ein Verkippen quer zur Förderrichtung, können die Objekte an einer Seite der Transportvorrichtung angehäuft werden, was insbesondere bei der Umformung von mehrspurigen Behälterströmen ausgenutzt werden kann.

Ein Ende des Steges oder der Transporteinrichtung kann auch drehbar gelagert sein, so dass dann nur jeweils eine Hubeinrichtung benötigt wird, mit der dann lediglich ein Verkippen der Stege oder Transporteinrichtung zueinander möglich ist. Wenn das drehbar gelagerte Ende ausreichend deutlich unterhalb der transportebene angeordnet ist, so kann auch in dieser Konstellation die Schnittlinie zwischen der Transportebene und der Unterstützungsebene über einen weiten Bereich der Transportvorrichtung eingestellt werden. In diesem Fall kann dann allerdings der Winkel zwischen der Transportebene und der Unterstützungsebene nicht unabhängig von der Position der Schnittlinie eingestellt werden.

Die Hubeinrichtungen können entweder die Transporteinrichtungen oder die Stege verfahren. Der Einfachheit halber werden in diesem Dokument die Hubeinrichtungen meist nur in Verbindung mit entweder den Stegen oder den Transporteinrichtungen beschrieben. Dies soll aber nicht als Beschränkung der vorliegenden Erfindung verstanden werden. Dem Fachmann ist bewusst, dass die beschriebenen Hubeinrichtungen sowohl zur Positionierung der Stege als auch zur Positionierung der Transporteinrichtung verwendet werden können.

Vorteilhafte Hubeinrichtungen umfassen zum Beispiel Exzenterstangen, die zum Beispiel unterhalb der Stege angeordnet sein können. Durch Drehung der Exzenterstangen, kann dann die Höhe der Stege oder Transporteinrichtungen variiert werden.

Alternativ können die Hubeinrichtungen auch umlaufende Bänder mit einer Verdickung oder Zunge sein. Diese umlaufenden Bänder werden unterhalb der Stege angeordnet und werden über eigene Umlenkrollen bewegt. Durch Drehung der Umlenkrollen kann der verdickte Bereich oder die Zunge des zusätzlichen Bands unter dem Steg positioniert werden, so dass dadurch der Steg um ein vorbestimmtes Maß angehoben wird.

Eine weitere Möglichkeit für eine Hubeinrichtung besteht zum Beispiel in einer unter dem Steg angeordneten Schraubenschnecke mit Stellelement. Durch Drehung der Schraubenschnecke wird das Stellelement entsprechend der Steigung und des Durchmessers der Schraubenschnecke in der Höhe verfahren.

Besonders vorteilhaft kann die vorliegende Erfindung beim Betrieb von breiten Förderstrecken, auf denen die Objekte mehrreihig transportiert werden, eingesetzt werden. Die Breite der einzelnen Transporteinrichtungen ist vorteilhafterweise jeweils etwa gleichgroß. Es können aber auch Transporteinrichtungen mit unterschiedlicher Breite miteinander kombiniert werden. Üblicherweise werden erfindungsgemäße Transportvorrichtungen in abwechselnder Reihenfolge Transporteinrichtungen und Stege aufweisen, wobei die Objekte jeweils entweder auf den Stegen oder auf den Transporteinrichtungen stehen. Damit die Objekte trotzdem jederzeit sicher auf der Transportvorrichtung stehen, sollte die Breite der Transporteinrichtungen und Stege höchstens 50 % der Breite bzw. des Querschnitts des Bodens der zu transportierenden Objekte betragen. Je kleiner die Breite der Transporteinrichtungen und Stege gegenüber den zu transportierenden Objekten ist, desto größer ist die Standfestigkeit der Objekte.

Weiter vorzugsweise sollte daher die Breite der Transporteinrichtungen und Stege weniger als 30 %, und noch bevorzugter weniger als 20 % der Breite der Standfläche der zu transportierenden Objekte betragen. Typische heutzutage verwendete Getränkeflaschen haben eine im Wesentlichen zylindrische Form und einen Bodendurchmesser von etwa 5 cm bis 12 cm. Die Breite der Transportbänder sollte demnach weniger als 6 cm, vorzugsweise weniger als 5 cm und weiter vorzugsweise weniger als 3,5 cm und besonders bevorzugt etwa 1,5 cm bis 2 cm betragen. Grundsätzlich gilt, dass die Objekte umso besser und stabiler stehen, je schmaler die Transportbänder oder Stege sind, da dann die Objekte immer auf mehreren Transportbändern oder Stegen gleichzeitig stehen und von diesen transportiert werden. Die Transportbänder können aus technischen Gründen nicht beliebig schmal ausgeführt sein. Die Stege dagegen können aufgrund ihrer einfachen Konstruktion sehr geringe Breite aufweisen. Die Stege können bis zu 1 mm schmal sein und vorzugsweise etwa eine Breite von 5 mm aufweisen.

Die Stege können gemeinsam, in Gruppen oder individuell angesteuert sein. Die Stege können grundsätzlich eine beliebige Länge haben, solange diese zumindest das Doppelte des größten Durchmessers der Standfläche der Objekte aufweisen. Die Stege können zum Beispiel eine Länge von zwischen 0,3 m und 5 m, vorzugsweise von zwischen 0,5 m und 2 m, haben. Damit beim Übergang von den Transporteinrichtungen auf die Stege keine Stufen entstehen, bilden die Stege vorzugsweise eine schiefe Ebene, auf die die Objekte aufgeschoben werden. Alternativ oder zusätzlich können die Stege auch an den Stirnseiten mit abwärts geneigten Leitblechen versehen sein, so dass ein stufenloses Aufschieben der Objekte auch dann ermöglicht wird, wenn die Stege nur parallel zur Transportebene bewegbar sind.

Die Oberseiten der Stege können beliebiges Querschnittsprofil aufweisen. Die Oberseiten können flach, dreieckig, abgerundet, trapezförmig oder facettiert ausgestaltet sein. Insbesondere wenn die Objekte auch quer zur Transportrichtung über die Stege verschoben werden sollen, bietet es sich an, das Profil der Stege so auszuwählen, dass eine Stufenbildung gegenüber den Transporteinrichtungen vermieden wird.

Die Hubeinrichtungen sind vorzugsweise stufenlos vertikal verfahrbar, so dass nicht nur die beiden Extrempunkte der Steuerung, also "Stellelement voll ausgefahren", und "Stellelement vollständig abgesenkt", eingestellt werden können, sondern dass auch beliebige Zwischeneinstellungen möglich sind. Die Objekte können dadurch zum Beispiel so geringfügig über die Transportebene angehoben werden, so dass die Stärke der Reibung zwischen den Objekten und den Transportbändern und die entsprechende auf die Objekte einwirkende Antriebskraft kontinuierlich verändert werden kann. Die Objekte können damit gezielt gebremst und beschleunigt werden, wobei die Gefahr eines Umkippens der Objekte weitgehend reduziert ist.

Anhand der Stellelemente kann sowohl die vertikale Position der Transportebene der Transporteinrichtung gegenüber der durch die Stege definierten Unterstützungsebene, als auch der Steigungswinkel zwischen der Transportebene und der Unterstützungsebene eingestellt werden. Darüber hinaus, kann auch die horizontale Position der Schnittlinie zwischen der Transportebene und der Unterstützungsebene entlang der Transportrichtung verschoben werden. Die Schnittlinie definiert den Bereich in dem die stehend transportierten Objekte von der Transporteinrichtung auf die Stege, bzw. von den Stegen auf die Transporteinrichtung verschoben werden.

Die Erfindung lässt sich insbesondere zur Implementierung einer variablen Staustrecke vorteilhaft einsetzen. Durch ein gezieltes Einstellen der Stellglieder kann nicht nur die relative vertikale Positionierung und der Winkel zwischen der Transportebene und der Unterstützungsebene verändert werden, sondern es kann darüber hinaus auch die Länge der durch die Stege definierte Staustrecke frei gewählt werden. Es kann also sowohl das Abbremsverhalten als auch die Kapazität der Staustrecke in einfacher Weise an eine jeweils vorgegebenen Transportaufgabe angepasst werden. Insbesondere bei Störungen im Betriebsablauf kann der Behälterfluss durch gezieltes Einstellen der Staustrecke vorübergehend erhöht oder reduziert werden.

Das Stauende eines Behälterpulks wandert in realen Systemen in Abhängigkeit von der Menge der zugeförderten und abgezogenen Objekte und ist somit einer permanenten Fluktuation ausgesetzt. Ein wesentlicher Vorteil der Erfindung ist, dass die horizontale Position der Schnittlinie zwischen der Transportebene und der Unterstützungsebene entlang der Transportrichtung einstellbar ist und immer so nachgeregelt werden kann, dass sie im Bereich des Stauendes liegt. Auf diese Weise werden die Objekte dann solange auf der Transporteinrichtung gefördert, bis sie in die Nähe des Stauendes gelangen. Dort werden die Objekte dann auf die Unterstützungsebene geschoben und abgebremst, so dass Kollisionen unter den geförderten Objekten bei der Staubildung weitgehend vermieden werden können.

Vorzugsweise können die Stege mit speziellen Beschichtungen versehen sein, so dass der Reibungskoeffizient der Stege definiert und an die jeweiligen Transportanforderungen angepasst werden kann.

Die Oberfläche der Oberseite der Stege kann auch eine Profilierung aufweisen, so dass auf die zu transportierenden Objekte eine entsprechend dem Profil seitlich gerichtete Reibungskraft ausgeübt werden kann. Die Profilierung besteht dabei vorzugsweise aus schrägen Streifen einer Beschichtung erhöhter Reibung, wobei die Streifen unter einem Winkel schräg zur Transportrichtung angeordnet sind. Statt Streifen können die Stege auch schräge Schlitze an der Oberfläche aufweisen. Die Richtung der Profilierung gibt dann an in welche Richtung die Objekte abgelenkt werden. Das Profil kann sich entlang der Stege auch ändern, so dass unterschiedliches Ablenkverhalten über die Länge der Stege erreicht wird. Es ist auch möglich zwei höhenverstellbare Stege mit unterschiedlichen Profilen nebeneinander anzuordnen. In Abhängigkeit der jeweils benötigten Ablenkung, kann dann entscheiden werden, ob nur einer oder ob beide Stege ausgefahren werden sollen.

Vorzugsweise sind die Stege derart beschaffen, dass sie sich aufgrund Ihres eigenen Gewichts und/oder aufgrund des Gewichts der transportierten Objekte leicht durchbiegen. Der sich ergebende Krümmungsradius der Stege hängt von einer Vielzahl von Parametern, wie dem Querschnitt und der Länge der Stege, dem verwendeten Material und dem Gewicht der zu transportierenden Objekte ab. Aufgrund der Durchbiegung wird der sich zwischen der Transportebene und der Unterstützungsebene ergebende Winkel im Bereich der Schnittlinie verkleinert, was zu einem sanfteren Übergang der Objekte von der Transporteinrichtung auf die Stege ausgenutzt werden kann.

Die Transportvorrichtung kann auch horizontal verfahrbare Stellelemente aufweisen, mit denen die Stege und/oder Transporteinrichtungen quer zur Förderrichtung bewegt werden können. Dadurch kann die Transportvorrichtung, insbesondere der Abstand zwischen den einzelnen Stegen und/oder Transporteinrichtungen, variabel an die Größe der zu transportierenden Objekte angepasst werden.

Die Stege können dazu dienen, die zu transportierenden Behälter komplett von der Transportvorrichtung abzuheben. Solche Stege lassen sich insbesondere bei mehrbahnigen Staustrecken vorteilhaft nutzen. Beim Aufstauen der Objekte kommt es nämlich zu erheblichen Drücken am Ausgang der Staustrecken und durch die Reibung der unter den rückgestauten Objekten laufenden Transportbändern zu hohen Zugbelastungen, die sich sowohl auf das Band als auch auf die Antriebseinrichtung auswirken. Die Vermeidung dieser Reibungsverluste führt zu zahlreichen Vorteilen gegenüber herkömmlichen Systemen. Es kann eine beträchtliche Energieersparnis erzielt werden. Es muss kein oder zumindest deutlich weniger Schmiermittel eingesetzt werden und die Lebensdauer der einzelnen Komponenten kann erhöht werden.

In einer weiteren Ausführungsform kann die Transportfläche der Transporteinrichtung eine gerillte Oberfläche aufweisen, so dass die Transportebene von den Oberseiten von in Transporteinrichtung verlaufenden kammartigen Strukturen gebildet wird. Die Breite der kammartigen Strukturen und der zwischen den kammartigen Strukturen verlaufenden Rillen ist grundsätzlich frei wählbar und kann nur wenige Millimeter betragen. Die Stege sind dabei so ausgebildet, dass sie sich innerhalb der Rillen zwischen den kammartigen Strukturen der Transporteinrichtung erstrecken. Vorzugsweise erstrecken sich die Stege in Transportrichtung bis über die Transporteinrichtung hinaus. Und sind an Ihren vorderen und hinteren Enden miteinander verbunden. Die Stege bilden dann eine grillartige Struktur, durch die hindurch sich die kammartigen Strukturen der Transporteinrichtung erstrecken können.

Aufgrund der geringen Breite der kammartigen Strukturen der Transporteinrichtung und der Stege, können in dieser Ausführungsform eine Vielzahl von Objekten mit unterschiedlicher Größe gefördert werden. Die oben in Zusammenhang mit anderen Ausführungsformen angegebenen Größenbeschränkungen der Fördereinrichtungen und Stege treffen für diese Ausführungsform nicht zu. Die vorliegende Erfindung betrifft auch ein entsprechendes Verfahren zum Transportieren von Objekten und zur Steuerung des Behälterflusses, mit mindestens einer Transporteinrichtung, die eine Fördergeschwindigkeit aufweist, mit mindestens einem Steg, der parallel zur mindestens einen Transporteinrichtung angeordnet ist, wobei die Oberseite des Stegs eine Unterstützungsebene definiert, wobei der Steg eine Länge aufweist, die einem Vielfachen des Durchmessers der Standfläche der zu transportierenden Objekte entspricht, und wobei die relative Verkippung der Unterstützungsebene des Stegs gegenüber der Transportebene der mindestens einen Transporteinrichtung mittels einer Hubeinrichtung verändert wird. Die Hubeinrichtung ermöglicht eine stufenlose Verkippung des Stegs und/oder der Transporteinrichtung, so dass die horizontale Position einer Schnittlinie zwischen der Unterstützungsebene und der Transportebene stufenlos einstellbar ist. Die vorliegende Erfindung kann vorteilhaft in verschiedenen Bereichen der Behälterflusssteuerung eingesetzt werden. Zum Beispiel werden bei Förderanlagen oftmals Staustrecken benötigt, auf denen sich zu transportierende Objekte in mehreren parallelen Bahnen ansammeln können. Zwischen den Transportbändern und den darauf zurückgestauten Objekten treten hohe Reibungsverluste auf, die zu erhöhten Zugbelastungen der Transportbänder und Antriebsmotoren führen. Mit der erfindungsgemäßen Transportvorrichtung können die zurückgestauten Objekte von der sich kontinuierlich bewegenden ersten Fördereinrichtung abgehoben werden. Mit der erfindungsgemäßen Vorrichtung wird dabei die horizontale Position der Schnittlinie zwischen der Transportebene und der Unterstützungsebene so eingestellt, dass sie in etwa in dem Bereich des Stauendes der bereits auf der Unterstützungsebene aufgestauten Objekte liegt. Die Objekte werden dann solange auf der Transporteinrichtung befördert, bis sie das Stauende erreichen. Am Stauende werden die Objekte dann durch das sanfte Aufschieben auf die Unterstützungsebene abgebremst und reihen sich an die bereits aufgestauten Objekte an. Da sich die Position des Stauendes permanent ändert, muss für den optimalen Betrieb die genaue Ausrichtung der Unterstützungsebene sowie die Position der Schnittlinie zwischen der Transportebene und der Unterstützungsebene ebenfalls ständig nachgeregelt werden. Zur Erkennung des Stauendes sind dem Fachmann verschiedene Systeme bekannt. In einer zweckmäßigen Ausführungsform kann das Stauende über Lichtschranken erkannt werden. Außerdem kann die Förderstrecke auch mit Kameras überwacht werden und das Stauende kann durch Auswertung der Kamerabilder bestimmt werden. Die Steuerung der Stege, kann auch in Abhängigkeit der Leistungsaufnahme der Antriebseinrichtungen erfolgen. Je mehr Behälter sich auf einer Staustrecke ansammeln, desto mehr Reibung wird zwischen den Transporteinrichtungen und den Behälterböden verursacht. Mit zunehmendem Reibungswiderstand nimmt aber auch die Leistungsaufnahme der Antriebseinrichtungen zu, so dass die Leistungsaufnahme ein Maß für die Länge des Behälterstaus auf der Transportebene darstellt. Wenn die Leistungsaufnahme einen Schwellwert übersteigt, können dann die Stege ausgefahren werden, wodurch die in diesem Bereich bereits gestauten Behälter von der Transportebene abgehoben werden. Am Ausgang von Staustrecken muss der mehrspurige Behälterstrom meist wieder in einen einspurigen Behälterstrom umgeformt werden. Bei dieser Umformung werden die Behälter zum Beispiel von kurvenförmig gebogenen Seitengeländern, quer zur Transportrichtung auf eine schneller laufende Abzugs-Transporteinrichtung geschoben. Um die Querverschiebung zu unterstützen, können die Transporteinrichtungen im Ausgangsbereich der Staustrecke terrassenartig angeordnet sein, so dass ein Gefälle in Richtung der Abzugs-Transporteinrichtung entsteht und die Schwerkraft eine seitliche Verschiebung der Objekte unterstützt. Damit die Stege beim Querverschieben der Objekte über die Transporteinrichtungen keine Stufenkanten bilden, bietet es sich an, Stege einzusetzen die ein abgerundetes oder facettiertes Profil an ihrer Oberseite aufweisen. Außerdem ist es von Vorteil, wenn die Stege einzeln ansteuerbar sind, da dann die Stege einzeln dem jeweiligen Betriebszustand angepasst werden können.

Ein weiteres Anwendungsgebiet der vorliegenden Erfindung ist die staudrucklose Vereinzelung von im Pulk transportierten Objekten. Bisher wird hierzu ein mehrspuriger Behälterstrom auf einen Beschleunigungsbereich geführt, auf dem jeweils die vorderste Behälterreihe zeitversetzt abgegeben wird. Die Behälterreihe wird dann an einem langen Geländer entlang geführt, an dem sich die Behälter im Idealfall hintereinander anordnen und einen einspurigen Behälterstrom bilden. Die Behälter werden hierbei nicht geführt, und es kommt immer wieder vor, dass zwei Behälter nebeneinander auf das Geländer zulaufen und sich nicht von alleine hintereinander anordnen können. Mit der vorliegenden Erfindung lässt sich dieses Verfahren besser kontrollieren, indem durch gezieltes Absenken der Stege oder Transporteinrichtungen einzelne Behälter gesteuert und nacheinander auf einen abführenden Transporteur abgegeben werden. Mit der Steuerung kann sichergestellt werden, dass die Objekte jeweils einzeln abgegeben werden, und dass ein zeitgleiches Freigeben zweier Behälter vermieden wird. Die Behälter können daher an einem vergleichsweise kurzen Geländer zu einem einspurigen Strom umgeformt werden.

In einer weiteren Ausführungsform der vorliegenden Erfindung, kann die Transportvorrichtung auch aus einem relativ breiten Steg bestehen, der zentral zwischen zwei relativ schmalen Transporteinrichtungen angeordnet ist, bestehen. Die Breite des Stegs und der Transportbänder ist dabei so gewählt, dass ein zu transportierendes Objekt sowohl sicher auf der durch den Steg definierten Unterstützungsebene, als auch auf der durch die Transporteinrichtungen definierten Transportebene stehen bzw. gefördert werden kann. Der Steg und die seitlich dazu angeordneten Transporteinrichtungen können dabei eine Baugruppe bilden. Durch paralleles Anordnen mehrerer solcher Baugruppen kann dann ein Transporteur beliebiger Breite gebildet werden.

Merkmale die im Zusammenhang mit einzelnen Ausführungsformen beschrieben sind, können, sofern nichts anderes angegeben ist, auch in anderen Ausführungsformen realisiert werden.

Ausführungsbeispiele der Erfindung werden nachfolgend anhand der Zeichnungen erläutert. Es zeigen:
Figur 1 Draufsicht einer Transportvorrichtung mit abwechselnd angeordneten höhenverstellbaren Stegen und festen Transporteinrichtungen;
Figur 2 Querschnittsansicht einer Transportvorrichtung mit höhenverstellbaren Transporteinrichtungen und höhenverstellbaren Stegen;
Figur 3 Seitenansicht der Transportvorrichtung aus Figur 2;
Figur 4 Draufsicht und Seitenansicht einer Staustrecke mit verstellbaren Stegen;
Figur 5 verschiedene Stegprofile;
Figur 6 Querschnitt einer Staustrecke gemäß Figur 4 mit terrassenartig angeordneten Transporteinrichtungen und Stegen;
Figur 7 verschiedene Reibungsprofile der Stegoberseite;
Figur 8 Seitenansicht einer Ausführungsform mit einer Transporteinrichtung mit kammartigen Strukturen; und
Figur 9 Vorderansicht der Ausführungsform nach Figur 8.

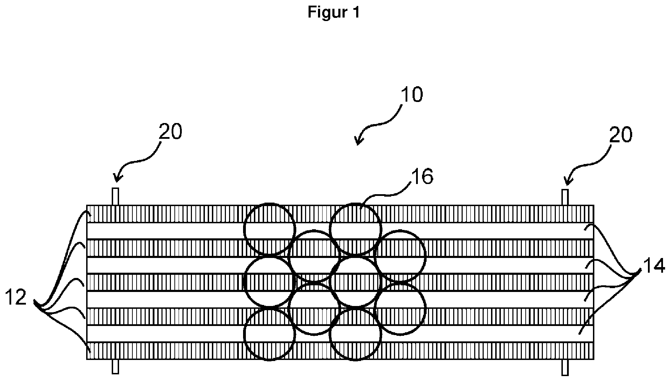

Figur 1 zeigt einen Abschnitt einer Transportvorrichtung 10 mit mehreren parallel angeordneten Transporteinrichtungen 12, auf der eine Vielzahl von Objekten 16 transportiert wird. In diesem Beispiel sind die Transporteinrichtungen 12 umlaufende Transportbänder, und die Objekte 16 sind Getränkeflaschen. Anstelle von Transportbändern können aber genauso gut Gliederkettenförderer oder andere geeignete Transporteinrichtungen zum Einsatz kommen. Zwischen den Transportbändern 12 sind höhenverstellbare Stege 14 angeordnet, die über Hubeinrichtungen 20 vertikal verfahrbar sind.

Die Hubeinrichtungen 20 in Figur 1 sind zwei Exzenterstangen, die an den jeweiligen Endbereichen der Stege 14 vorgesehen sind und über die alle Stege 14 miteinander gekoppelt sind. Durch Drehung der Exzenterstangen 20 werden die Stege 14 angehoben oder abgesenkt. Werden beide Exzenterstangen gleichförmig bewegt, so werden die Stege 14 parallel zu der durch die Transporteinrichtungen 12 definierten Transportebene bewegt. Durch selektives Bewegen nur einer der beiden Exzenterstangen können die Stege 14 gegenüber der Transportebene verkippt werden.

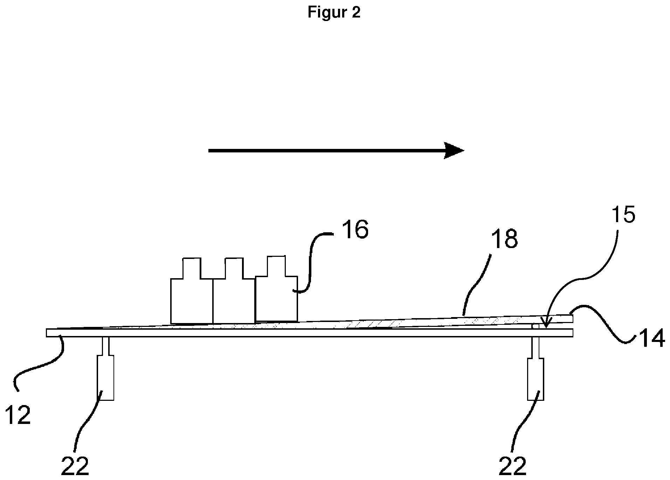

In Figur 2 ist eine Seitenansicht eines Transporteurs gezeigt, der ebenfalls in abwechselnder Reihenfolge parallelen Transportbahnen 12 und höhenverstellbare Stege 14 aufweist. In der Seitenansicht sind jeweils nur ein Transportband 12 und ein höhenverstellbarer Steg 14 dargestellt. Selbstverständlich können aber beliebig viele Transportbänder 12 und Stege 14 in beliebiger, vorzugsweise abwechselnder Reihenfolge, angeordnet werden. Die tatsächliche Anordnung und Anzahl der verwendeten Transportbänder 12 und Stege 14 hängt dabei von dem jeweiligen Einsatzzweck ab. Die Flaschen 16 werden von links nach rechts gefördert, wie durch den Pfeil in Figur 2 angedeutet ist.

In Figur 2 werden die Stege 14 über zwei pneumatische Stellelemente 22 positioniert, die jeweils an den Endbereichen der Stege 14 vorgesehen sind. Die Oberseiten der Stege 14 definieren dabei eine Unterstützungsebene 18. In der in Figur 2 gezeigten Konfiguration sind die beiden Stellelemente 22 unterschiedlich weit ausgefahren, so dass die Unterstützungsebene 18 gegenüber der Transportebene etwas verkippt ist. In der in Figur 2 gezeigten Konfiguration werden die Flaschen 16 auf die durch die Stege definierte Unterstützungsebene 18 aufgeschoben. Durch die Verkippung wird dabei ein sehr sanftes Aufschieben der Flaschen 16 auf die Stege 14 ermöglicht. Vorzugsweise ist das Aufschieben ein dynamischer Vorgang, bei dem sowohl der Verkippungswinkel als auch die Ausfahrhöhe der einzelnen Stellelemente an die jeweiligen aktuellen Transportanforderungen angepasst werden kann.

Zum Freigeben der Flaschen 16 werden die Stege 14 dann zumindest am stromabwärts gelegenen Ende abgesenkt, so dass die Flaschen 16 dann auf der Transportvorrichtung 10 abgesetzt und weiter transportiert werden können. Insbesondere beim Freigeben ist es von Vorteil, wenn die einzelnen Stege individuell über eigene Stellelemente verfügen, mit den die Stege selektiv verfahren werden können. Auf diese Weise kann gezielt jeweils eine bestimmte Flasche zum Weitertransport freigegeben werden.

Da die Flaschen 16, solange sie auf den Stegen 14 stehen, nicht in Kontakt mit den Transportbändern 12 sind, entsteht auch keine Reibung zwischen den Flaschen 16 und den Transportbändern 12, so dass mit dieser Ausführungsform insbesondere bei der Implementierung von Staustrecken eine erhebliche Energieersparnis erzielt werden kann.

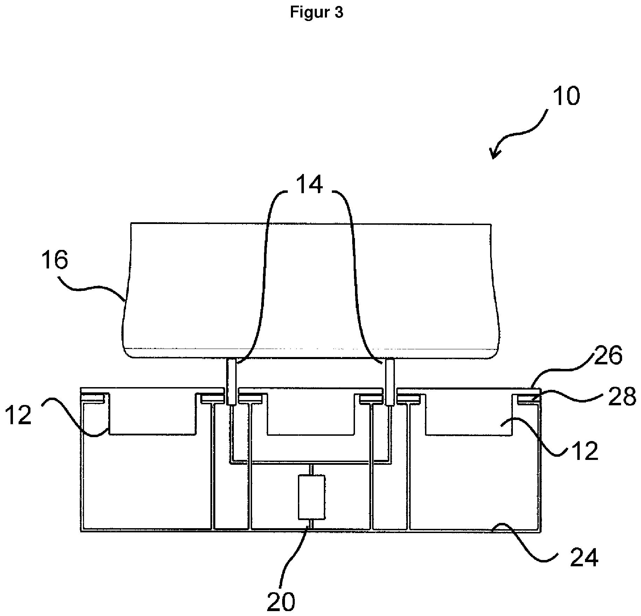

In Figur 3 ist die Transportvorrichtung 10 in einer Querschnittsansicht quer zur Förderrichtung gezeigt. Die Transportvorrichtung 10 umfasst drei fest angeordnete Transporteinrichtungen 12 und zwei höhenverstellbare Stege 14, die in einer Rahmenkonstruktion 24 angeordnet sind. Jedes Transportband 12 weist seitliche Schultern 26 auf, mit denen die Transportbänder 12 auf Auflageflächen 28 der Rahmenkonstruktion 24 aufliegen.

Die beiden Stege 14 können über ein Stellglied 20 in der Höhe verfahren werden. In der in Figur 3 gezeigten Konfiguration ist das Stellglied 20 ausgefahren, so dass die Unterstützungsebene 18 der Stege über die Transportebene herausragt. Der Flaschenboden der zu transportierenden Flasche 16 steht daher ausschließlich auf den Stegen und wird in dieser Situation nicht weitergefördert.

Damit die Flasche auf den Transportbändern 12 und Stegen 14 einen sicheren Stand hat, beträgt die Breite der Transportbänder 12 etwa 40% des Durchmessers der zu transportierenden Flasche 16. Die Stege sind demgegenüber deutlich schmäler ausgeführt.

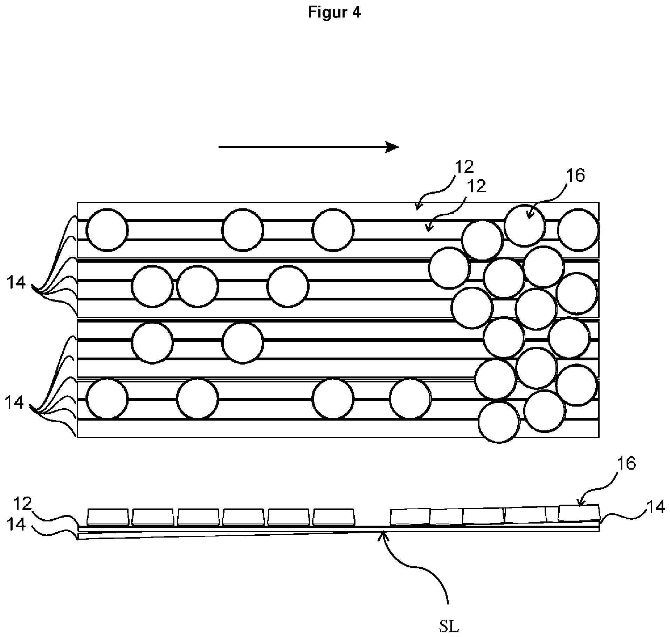

In Figur 4 ist eine Staustrecke abgebildet, für die sich die Anwendung der Stege 14 besonders eignet. Staustrecken werden oftmals in Abfüllanlagen benötigt, um bei Störungen im Produktionsablauf, eine Zwischenspeicherung von Behältern 16 zu ermöglichen, so dass stromaufwärts angeordnete Einheiten trotz der Störung weiterbetrieben werden können. Auf Staustrecken werden die Behälter 16 mehrspurig zurückgehalten während. In konventionellen Anlagen werden die Transportbänder 12 unter den gestauten Behältern 16 durchgezogen, was insbesondere wenn eine Vielzahl von Behältern 16 zu stauen ist, zu beträchtlichen Reibungsverlusten führt. Um diese Reibungsverluste zu reduzieren sind bei der Staustrecke in Figur 4 höhenverstellbare und verkippbare Stege 14 vorgesehen, die in abwechselnder Reihenfolge zwischen den einzelnen Transporteinrichtungen 12 angeordnet sind. Aus der Seitenansicht in Figur 4 ist zu erkennen, dass die Stege 14 gegenüber der Transportebene verkippt sind, so dass die angeförderten Behälter 16 im zentralen Übergangsbereich sanft auf die durch die Stege 14 gebildete Unterstützungsebene 18 aufgeschoben werden. Die Höhe der Stege 14 ist so gewählt, dass die sich am stromabwärts gelegenen Ende der Stege 14 befindenden Behälter 16, die bereits gestaut werden, vollends von der Transportebene abgehoben sind.

Bei zunehmender Befüllung der Staustrecke wird die Höhe und/oder die Verkippung der Stege 14 so eingestellt, dass jeweils die angeförderten Behälter auf die Stege aufgeschoben werden können, und dass die bereits gestauten Behälter 16 vollends von der Transportebene abgehoben sind. Idealerweise wird dabei die horizontale Position der Schnittlinie zwischen der Transportebene und der Unterstützungsebene so eingestellt, dass sie in etwa in dem Bereich des Stauendes der bereits auf der Unterstützungsebene aufgestauten Objekte liegt. Die Objekte werden dann solange auf der Transporteinrichtung befördert, bis sie das Stauende erreichen. Am Stauende werden die Objekte dann durch das sanfte Aufschieben auf die Unterstützungsebene abgebremst und reihen sich an die bereits aufgestauten Objekte an. Da sich die Position des Stauendes permanent ändert, muss für den optimalen Betrieb, die genaue Ausrichtung der Unterstützungsebene sowie die Position der Schnittlinie zwischen der Transportebene und der Unterstützungsebene ebenfalls ständig nachgeregelt werden.

Die in Figur 4 gezeigte Konfiguration stellt den Beginn der Stauentwicklung dar. Bei vollständiger Aufstauung, ordnen sich die rotationssymmetrischen Behälter gemäß einer 2-dimensionalen dichtesten Kugelpackung an. Wie in Figur 4 zu erkennen ist, befindet sich die Schnittlinie SL in dem Bereich des Stauendes des bereits auf den Stegen 14 gestauten Flaschenpulks. Mit zunehmender Staulänge kann die Schnittlinie in Richtung des stromaufwärts liegenden Endes der Transporteinrichtung verschoben werden. Durch die Einstellung der Höhe und der Verkippung der Stege 14, wird die Schnittlinie SL immer der aktuellen Position des Stauendes nachgeführt.

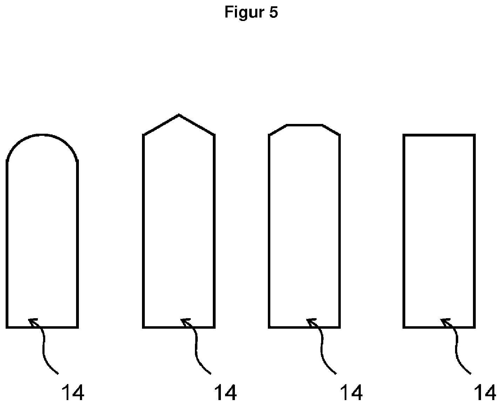

Oft ist es am stromabwärts gelegenen Ende der Staustrecken notwendig, den mehrspurigen Behälterstrom in einen einspurigen Behälterstrom umzuformen. Dazu sind am stromabwärts gelegenen Ende der Staustrecke Leitbleche (nicht dargestellt) vorgesehen, welche die Behälter 16 typischerweise in Richtung eines Begrenzungsgeländers der Transportvorrichtung 10 leiten. Bei dieser Umformung werden die Behälter 16 auch mit einer Komponente quer zur Transportrichtung auf der Transportvorrichtung 10 verschoben. Dies bedeutet bei der Anordnung der Figur 4 aber auch, dass die Behälter 16 quer über die möglicherweise leicht erhöhten Stege 14 geschoben werden müssen. Stege 14 mit rechteckigem Profil würden dabei wie Stufenkanten wirken, und könnten eine Umkippen der Behälter 16 auslösen. Um ein solches Kippen zu vermeiden, weisen die Stege 14 zweckmäßiger Weise ein abgerundetes oder facettiertes Profil auf. Mögliche Profilformen für die Oberseiten der Stege 14 sind in Figur 5 abgebildet.

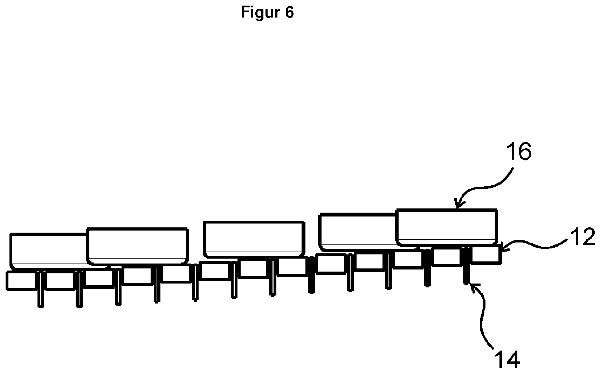

Bei der Umformung eines mehrspurigen Behälterstroms werden die parallel angeordneten Transporteinrichtungen 12 oft terrassenförmig und/oder mit einem Neigungswinkel angeordnet, um die Querbewegung der Behälter 16 relativ zur Transportebene zu aufgrund der Schwerkraft zu unterstützen. Eine terrassenförmige Anordnung lässt sich auch mit der vorliegenden Erfindung erreichen, wie in Figur 6 dargestellt ist. Dort ist eine Querschnittsansicht gezeigt, wobei wiederum zwischen den einzelnen Transporteinrichtungen 12 höhenverstellbare Stege 14 vorgesehen sind. Die tieferliegend angeordneten Transporteinrichtungen 12 werden üblicherweise mit höherer Geschwindigkeit betrieben, um auf diesen Transporteinrichtungen 12 die gesamten gestauten Behälter 16 schnell abzutransportieren. Durch gezielte individuelle Einstellung der Höhe der Stege 14 zwischen den terrassenförmig angeordneten Transporteinrichtungen 12 wird eine quer zur Transportrichtung abfallende Unterstützungsebene definiert, auf der die Behälter 16 sich während der Umformung bewegen. Auch bei der Anordnung nach Figur 6 bietet es sich an, eines der abgerundeten oder facettierten Profile für die Stege 14 zu wählen.

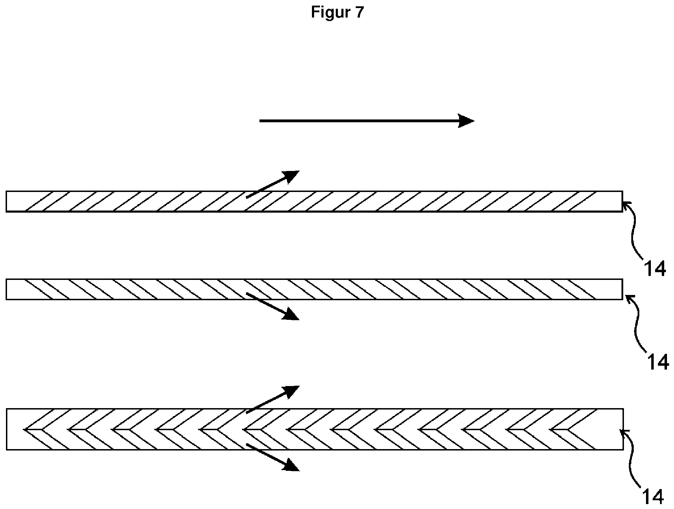

In Figur 7 sind Oberseiten von Stegen abgebildet, die jeweils ein unterschiedliches Reibungsprofil aufweisen. Das Reibungsprofil kann zum Beispiel aus Streifen einer Reibungsbeschichtung bestehen. Das Profil kann auch durch schräg angeordnete Schlitze gebildet sein. Wenn die Stege nur so weit ausgefahren werden, dass die Objekte zwar noch gefördert werden, aber zwischen der Oberfläche der Stege und den Objekten eine Reibung erzeugt wird, so kann durch das Reibungsprofil eine Ablenkung der Objekte erreicht werden. Die Richtung des Reibungsprofils gibt an, in welcher Richtung die zu transportierenden Objekte abgelenkt werden. Die Ablenkungsrichtung ist durch die jeweiligen Pfeile in Figur 7 dargestellt.

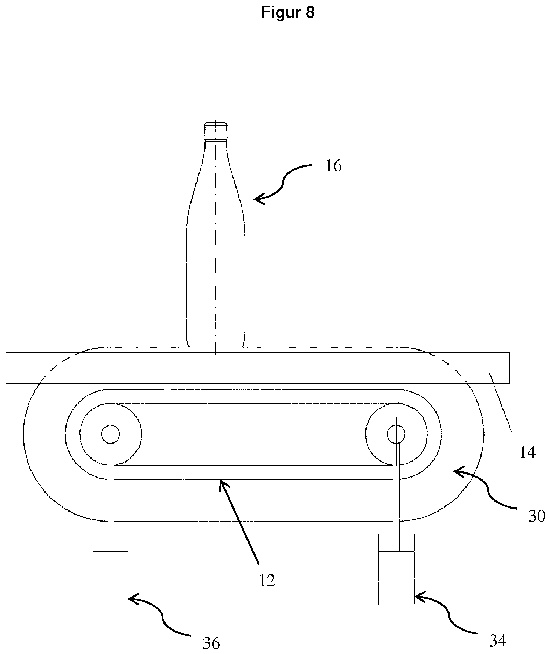

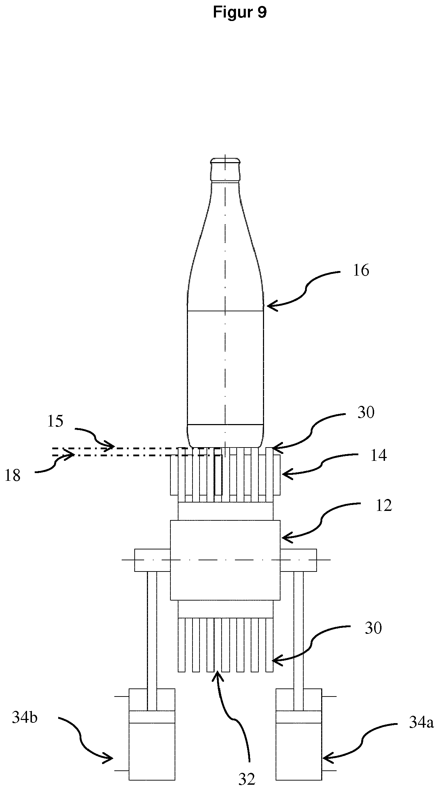

In den Figuren 8 und 9 ist eine weitere Ausführungsform der Erfindung abgebildet, in denen die Transporteinrichtung 12 kammartige Strukturen 30 aufweist, deren Oberseite die Transportebene 15 für die zu transportierenden Objekte 16 bildet. Die Stege 14 sind in dieser Ausführungsform ortsfest und sind in den Zwischenräumen 32 zwischen den kammartigen Strukturen 30 der Transporteinrichtung 12 angeordnet. Die Transporteinrichtung 12 ist über die Stellelemente 34a, 34b, 36a, 36b, die jeweils an den vorderen und hinteren Umlenkrollen der Transporteinrichtung 12 vorgesehen sind, höhenverstellbar ausgeführt. In den Figuren 8 und 9 sind die Stellelemente 34a, 34b, 36a, 36b derart eingestellt, dass sich die Transportebene 15 parallel oberhalb der durch die Stege 14 definierten Unterstützungsebene 18 befindet. In dieser Konfiguration werden die Objekte 16 ohne Beeinflussung durch die Stege 14 auf der Transporteinrichtung 12 gefördert. Die Positionierung der Transportebene 15 der Transporteinrichtung 12 ist durch die insgesamt vier voneinander unabhängig ansteuerbaren Stellelemente 34a, 34b, 36a, 36b einstellbar. Durch Absenken der vorderen 34a, 34b oder hinteren Stellelemente 36a, 36b kann die Transportebene 15 der Transporteinrichtung 12 gegenüber der Unterstützungsebene 18 in der Höhe verfahren und/oder verkippt werden, wobei die kammartigen Strukturen 30 zwischen den Stegen 14 hindurch abgesenkt werden, so dass Objekte 16 abschnittsweise oder über die gesamte Länge der Transportrichtung 12 auf der durch die Stege 14 definierte Unterstützungsebene 18 abgesetzt werden. Dabei sind nicht nur die relative vertikale Positionierung und der Winkel zwischen der Transportebene 15 und der Unterstützungsebene 18 einstellbar, sondern es kann auch die horizontale Position der Schnittlinie zwischen der Transportebene 15 und der Unterstützungsebene 18 verändert werden. Die Transporteinrichtung kann damit bei Staustrecken zum Beispiel immer genau so positioniert werden, dass die Schnittlinie sich in dem Bereich des Stauendes befindet.

**Bezugszeichenliste:**

| | |
|---|---|
| 10 Transportvorrichtung | 24 Rahmenkonstruktion |
| 12 Transporteinrichtung | 26 seitliche Schultern |
| 14 höhenverstellbarer Steg | 28 Auflageflächen |
| 15 Transportebene | 30 kammartige Oberflächenstrukturen |
| 16 Objekt | 32 Zwischenräume |
| 18 Unterstützungsebene | 34a,b vordere Stellelemente |
| 20 Hubeinrichtung | 36a, b hintere Stellelemente |
| 22 pneumatische Stellelemente | |

## Patentansprüche

1. Vorrichtung zum Transportieren von stehenden Objekten, wie Behältern, Flaschen, Gebinden, Packstücken, umfassend
mindestens eine Transporteinrichtung (12), die eine erste Fördergeschwindigkeit aufweist, und eine Transportebene (15) für den stehenden Transport der Objekte (16) definiert,
mindestens einen Steg (14), der parallel zur Transporteinrichtung (12) angeordnet ist, wobei die Oberseite des Stegs (14) eine Unterstützungsebene (18) definiert und wobei der Steg (14) eine Länge aufweist, die mindestens dem Doppelten des Durchmessers der Standfläche der zu transportierenden Objekte (16) entspricht, und
eine Hubeinrichtung (20) mit der eine relative Verkippung der Unterstützungsebene (18) des Stegs (14) gegenüber der Transportebene (15) der mindestens einen Transporteinrichtung (12) verändert werden kann,
**dadurch gekennzeichnet, dass** die Hubeinrichtung (20) eine stufenlose Verkippung des Stegs (14) und/oder der Transporteinrichtung (12) ermöglicht, so dass die horizontale Position einer Schnittlinie (SL) zwischen der Unterstützungsebene (18) und der Transportebene (15) in Transportrichtung stufenlos einstellbar ist.

2. Vorrichtung gemäß Anspruch 1, wobei die Geschwindigkeit der mindestens einen Transporteinrichtung (12) einstellbar ist.

3. Vorrichtung gemäß Anspruch 1 oder 2, wobei mindestens zwei Stege (14) beidseitig der mindestens einen Transporteinrichtung (14) vorgesehen sind und wobei die Oberseiten der Stege (14) die Unterstützungsebene (18) definieren.

4. Vorrichtung gemäß einem der vorhergehenden Ansprüche, umfassend eine Vielzahl von Transporteinrichtungen (12) und Stegen (14), die jeweils in abwechselnder Reihenfolge quer zur Transportrichtung angeordnet sind, wobei die Breite der Transporteinrichtungen (12) jeweils etwa gleich groß und kleiner als 50 %, vorzugsweise kleiner als 30 % und noch bevorzugter kleiner als 20 % der Breite der Standfläche der zu transportierenden Objekte (16) ist.

5. Vorrichtung gemäß einem der vorhergehenden Ansprüche, umfassend eine Vielzahl von Transporteinrichtungen (12) und eine Vielzahl von zwischen den Transporteinrichtungen angeordneten höhenverstellbaren Stegen (14), wobei die Stege jeweils einzeln oder in Gruppen über eigene Hubeinrichtungen (20) in der vertikalen Position verfahrbar sind.

6. Vorrichtung gemäß einem der vorhergehenden Ansprüche, wobei die Hubeinrichtung (20) Stellelemente umfasst, die an dem vorderen und an dem hinteren Ende der Stege (14) und/oder Transporteinrichtung (12) vorgesehen sind, und die eine stufenlose vertikale Positionierung, der jeweiligen Enden der Stege (14) und/oder Transporteinrichtung (12) ermöglichen, so dass die horizontale Position der Schnittlinie zwischen der Unterstützungsebene (18) und der Transportebene (15), sowie der Winkel zwischen der Unterstützungsebene (18) und der Transportebene (15) unabhängig voneinander einstellbar sind.

7. Vorrichtung gemäß einem der vorhergehenden Ansprüche, wobei die Hubeinrichtung (20) mechanische, elektromotorische, pneumatische oder hydraulische Stellelemente aufweisen.

8. Vorrichtung gemäß einem der vorhergehenden Ansprüche, wobei die Hubeinrichtung (20) am vorderen und/oder hinteren Ende der Stege (14) Exzenterstangen aufweisen, mit denen die vertikale Position der Stege (14) gegenüber der Transportebene (15) der mindestens einen Transporteinrichtung (12) eingestellt werden kann.

9. Vorrichtung gemäß einem der vorhergehenden Ansprüche, wobei die mindestens eine Transporteinrichtung (12), kammartige Oberflächenstrukturen (30) aufweist, deren Oberseite die Transportebene (15) definieren, und wobei sich die Stege in Transportrichtung zwischen den kammartigen Oberflächenstrukturen (30) erstrecken.

10. Verfahren zum Transportieren von stehenden Objekten, wie Behältern, Flaschen, Gebinden, Packstücken, umfassend
mindestens eine Transporteinrichtung (12), die eine Fördergeschwindigkeit aufweist, und eine Transportebene (15) für den stehenden Transport der Objekte (16) definiert
mindestens einen Steg (14), der parallel zur mindestens einen Transporteinrichtung (12) angeordnet ist, wobei die Oberseite des Stegs (14) eine Unterstützungsebene (18) definiert, und wobei der Steg (14) eine Länge aufweist, die mindestens dem Doppelten des Durchmessers der Standfläche der zu transportierenden Objekte entspricht, und
wobei die relative Verkippung der Unterstützungsebene (18) des Stegs (14) gegenüber der Transportebene (15) der mindestens einen Transporteinrichtung (12) mittels einer Hubeinrichtung (20) verändert werden kann, **dadurch gekennzeichnet, dass** die Hubeinrichtung (20) eine stufenlose Verkippung des Stegs (14) und/oder der Transporteinrichtung (12) ermöglicht, so dass die horizontale Position der Schnittlinie (SL) zwischen der Unterstützungsebene (18) und der Transportebene (15) stufenlos einstellbar ist.

11. Verfahren gemäß Anspruch 10, wobei die Hubeinrichtung (20) eine stufenlose vertikale Positionierung des Stegs (14) und/oder Transporteinrichtung (12) ermöglicht, so dass die horizontale Position der Schnittlinie (SL) zwischen der Unterstützungsebene (18) und der Transportebene (15) und der Verkippungswinkel zwischen der Unterstützungsebene (18) und der Transportebene (15) unabhängig voneinander einstellbar sind.

12. Verfahren gemäß Anspruch 10 oder 11, zum Aufstauen von auf einer Transportvorrichtung (10) transportierten Objekten (16), wobei die durch den Steg (14) definierte Unterstützungsebene (18) gegenüber der Transportebene (15) der mindestens einen Transporteinrichtung (12) zumindest abschnittsweise in Transportrichtung verkippt wird, so dass die Objekte (16) auf die Unterstützungsebene (18) aufgeschoben und dabei von der mindestens einen Transporteinrichtung (12) abgehoben werden.

13. Verfahren gemäß einem der Ansprüche 10 bis 12 zum Aufstauen von auf einer Transportvorrichtung (10) transportierten Objekten (16), wobei die horizontale Position der Schnittlinie (SL) zwischen der Unterstützungsebene (18) und der Transportebene (15) jeweils entsprechend dem aktuellen Stauende, der bereits auf der Transportvorrichtung aufgestauten Objekten (16) nachgeführt wird.

14. Verfahren gemäß Anspruch 13 zum Aufstauen von auf einer Transportvorrichtung (10) transportierten Objekten (16), wobei zusätzlich zur horizontalen Positionierung der Schnittlinie (SL) auch der Winkel, der sich zwischen der Unterstützungsebene (18) und der Transportebene (15) ergibt, auf einen vordefinierten Wert eingestellt werden kann.

## Claims

1. Apparatus for transporting standing objects, such as containers, bottles, multipacks and packaged items, comprising
at least one transporting device (12), which has a first conveying speed and defines a transporting plane (15) for the standing transport of the objects (16),
at least one web (14), which is arranged in parallel to the transporting device (12), wherein the upper side of the web (14) defines a supporting plane (18) and wherein the web (14) has a length which corresponds to at least twice the diameter of the base of the objects (16) to be transported, and
a lifting device (20) with which a tilt of the supporting plane (18) of the web (14) relative to the transporting plane (15) of the at least one transporting device (12) can be altered,
**characterized in that**
the lifting device (20) makes a step-free tilting of the web (14) and/or of the transporting device (12) possible, with the result that the horizontal position of an intersection line (SL) between the supporting plane (18) and the transporting plane (15) is adjustable step-free in the transporting direction.

2. Apparatus according to claim 1, wherein the speed of the at least one transporting device (12) is adjustable.

3. Apparatus according to claim 1 or 2, wherein at least two webs (14) are provided on either side of the at least one transporting device (14) and wherein the upper sides of the webs (14) define the supporting plane (18).

4. Apparatus according to one of the preceding claims, comprising a plurality of transporting devices (12) and webs (14), which are in each case arranged in alternating sequence transversely to the transporting direction, wherein the width of the transporting devices (12) in each case is approximately the same size and smaller than 50%, preferably smaller than 30% and still more preferably smaller than 20% of the width of the base of the objects (16) to be transported.

5. Apparatus according to one of the preceding claims, comprising a plurality of transporting devices (12) and a plurality of height-adjustable webs (14) arranged between the transporting devices, wherein the webs are movable in terms of the vertical position individually or in groups via their own lifting devices (20) in each case.

6. Apparatus according to one of the preceding claims, wherein the lifting device (20) comprises control elements, which are provided at the front and at the rear end of the webs (14) and/or transporting device (12) and which make a step-free vertical positioning of the respective ends of the webs (14) and/or transporting device (12) possible, with the result that the horizontal position of the intersection line between the supporting plane (18) and the transporting plane (15), as well as the angle between the supporting plane (18) and the transporting plane (15) are adjustable independently of each other.

7. Apparatus according to one of the preceding claims, wherein the lifting device (20) has mechanical, electromotive, pneumatic or hydraulic control elements.

8. Apparatus according to one of the preceding claims, wherein the lifting device (20), at the front and/or rear end of the webs (14), has eccentric rods, with which the vertical position of the webs (14) relative to the transporting plane (15) of the at least one transporting device (12) can be adjusted.

9. Apparatus according to one of the preceding claims, wherein the at least one transporting device (12) has comb-like surface structures (30), the upper side of which defines the transporting plane (15), and wherein the webs extend between the comb-like surface structures (30) in the transporting direction.

10. Method for transporting standing objects, such as containers, bottles, multipacks and packaged items, comprising
at least one transporting device (12), which has a conveying speed and defines a transporting plane (15) for the standing transport of the objects (16),
at least one web (14), which is arranged in parallel to the at least one transporting device (12), wherein the upper side of the web (14) defines a supporting plane (18), and wherein the web (14) has a length which corresponds to at least twice the diameter of the base of the objects to be transported, and
wherein the tilt of the supporting plane (18) of the web (14) relative to the transporting plane (15) of the at least one transporting device (12) can be altered by means of a lifting device (20),
**characterized in that**
the lifting device (20) makes a step-free tilting of the web (14) and/or of the transporting device (12) possible, with the result that the horizontal position of the intersection line (SL) between the supporting plane (18) and the transporting plane (15) is adjustable in a step-free manner.

11. Method according to claim 10, wherein the lifting device (20) makes a step-free vertical positioning of the web (14) and/or transporting device (12) possible, with the result that the horizontal position of the intersection line (SL) between the supporting plane (18) and the transporting plane (15) and the tilt angle between the supporting plane (18) and the transporting plane (15) are adjustable independently of each other.

12. Method according to claim 10 or 11, for accumulating objects (16) transported on a transporting apparatus (10), wherein the supporting plane (18) defined by the web (14) is tilted relative to the transporting plane (15) of the at least one transporting device (12) at least in portions in the transporting direction, with the result that the objects (16) are slid onto the supporting plane (18) and raised off the at least one transporting device (12).

13. Method according to one of claims 10 to 12 for accumulating objects (16) transported on a transporting apparatus (10), wherein the horizontal position of the intersection line (SL) between the supporting plane (18) and the transporting plane (15) is in each case updated corresponding to the current accumulation end of the objects (16) already accumulated on the transporting apparatus.

14. Method according to claim 13 for accumulating objects (16) transported on a transporting apparatus (10), wherein, in addition to the horizontal positioning of the intersection line (SL), the angle which results between the supporting plane (18) and the transporting plane (15) can also be set to a predefined value.

## Revendications

1. Dispositif destiné au transport d'objets debout, tels que des contenants, bouteilles, packs d'emballage, articles emballés, comprenant
au moins un moyen de transport (12) qui présente une première vitesse de convoyage et définit un plan de transport (15) pour le transport en position debout des objets (16),
au moins une passerelle (14) qui est agencée parallèlement au moyen de transport (12), la face supérieure de la passerelle (14) définissant un plan de soutien (18) et la passerelle (14) présentant une longueur qui correspond au moins au double du diamètre de la surface de pose des objets (16) à transporter, et
un système de levage (20) à l'aide duquel on peut faire varier un basculement relatif du plan de soutien (18) de la passerelle (14) par rapport au plan de transport (15) dudit au moins un moyen de transport (12),
**caractérisé en ce que**
le système de levage (20) permet un basculement à variation continue de la passerelle (14) et/ou du moyen de transport (12), de sorte que la position horizontale d'une ligne de découpage (SL) entre le plan de soutien (18) et le plan de transport (15) peut être ajustée en continu dans le sens de transport.

2. Dispositif selon la revendication 1, la vitesse dudit au moins un moyen de transport (12) pouvant être ajustée.

3. Dispositif selon la revendication 1 ou 2, au moins deux passerelles (14) étant prévues de part et d'autre dudit au moins un moyen de transport (14) et les faces supérieures des passerelles (14) définissant le plan de soutien (18).

4. Dispositif selon l'une quelconque des revendications précédentes, comprenant une pluralité de moyens de transport (12) et de passerelles (14) qui sont chacun agencés en alternance à la transversale du sens de transport, la largeur des moyens de transport (12) étant respectivement sensiblement aussi grande et inférieure à 50 %, de préférence inférieure à 30 % et, plus avantageusement, inférieure à 20 % de la largeur de la surface de pose des objets (16) à transporter.

5. Dispositif selon l'une quelconque des revendications précédentes, comprenant une pluralité de moyens de transport (12) et une pluralité de passerelles (14) ajustables en hauteur, agencées entre les moyens de transport, les passerelles pouvant être respectivement déplacées, dans leur position verticale, individuellement ou en groupe par le biais de systèmes de levage (20) qui leur sont propres.

6. Dispositif selon l'une quelconque des revendications précédentes, le système de levage (20) comprenant des éléments de réglage qui sont prévus à l'extrémité avant et à l'extrémité arrière des passerelles (14) et/ou du moyen de transport (12) et qui permettent un positionnement vertical à variation continue des extrémités respectives des passerelles (14) et/ou du moyen de transport (12), de sorte que la position horizontale de la ligne de découpage entre le plan de soutien (18) et le plan de transport (15), ainsi que l'angle entre le plan de soutien (18) et le plan de transport (15) peuvent être ajustés indépendamment l'un de l'autre.

7. Dispositif selon l'une quelconque des revendications précédentes, le système de levage (20) présentant des éléments de réglage mécaniques, électromoteurs, pneumatiques ou hydrauliques.

8. Dispositif selon l'une quelconque des revendications précédentes, le système de levage (20) présentant à l'extrémité avant et/ou à l'extrémité arrière des passerelles (14), des barres excentriques avec lesquelles on peut ajuster la position verticale des passerelles (14) par rapport au plan de transport (15) dudit au moins un moyen de transport (12).

9. Dispositif selon l'une quelconque des revendications précédentes, ledit au moins un moyen de transport (12) présentant des structures de surface en forme de peigne (30) dont la face supérieure définit le plan de transport (15), et les passerelles s'étendant entre les structures de surface en forme de peigne (30) dans le sens de transport.

10. Procédé destiné au transport d'objets debout, tels que des contenants, bouteilles, packs d'emballage, articles emballés, comprenant
au moins un moyen de transport (12) qui présente une vitesse de convoyage et définit un plan de transport (15) pour le transport en position debout des objets (16),
au moins une passerelle (14) qui est agencée parallèlement audit au moins un moyen de transport (12), la face supérieure de la passerelle (14) définissant un plan de soutien (18) et la passerelle (14) présentant une longueur qui correspond au moins au double du diamètre de la surface de pose des objets à transporter, et
le basculement relatif du plan de soutien (18) de la passerelle (14) pouvant être modifié par rapport au plan de transport (15) dudit au moins un moyen de transport (12) à l'aide d'un système de levage (20), **caractérisé en ce que**
le système de levage (20) permet un basculement en variation continue de la passerelle (14) et/ou du moyen de transport (12), de sorte que la position horizontale de la ligne de découpage (SL) entre le plan de soutien (18) et le plan de transport (15) peut être ajustée en continu.

11. Procédé selon la revendication 10, le système de levage (20) permettant un positionnement vertical en variation continue de la passerelle (14) et/ou du moyen de transport (12), de sorte que la position horizontale de la ligne de découpage (SL) entre le plan de soutien (18) et le plan de transport (15), et l'angle de basculement entre le plan de soutien (18) et le plan de transport (15) pouvant être ajustés indépendamment l'un de l'autre.

12. Procédé selon la revendication 10 ou 11, destiné à l'accumulation d'objets (16) transportés sur un dispositif de transport (10), le plan de soutien (18) défini par la passerelle (14) étant basculé au moins par sections dans le sens de transport par rapport au plan de transport (15) dudit au moins un moyen de transport (12), de sorte que les objets (16) sont transposés sur le plan de soutien (18) et y sont soulevés par ledit au moins un moyen de transport (12).

13. Procédé selon l'une quelconque des revendications 10 à 12 destiné à l'accumulation d'objets (16) transportés sur un dispositif de transport (10), la position horizontale de la ligne de découpage (SL) entre le plan de soutien (18) et le plan de transport (15) étant tracée à chaque fois en fonction de là où s'arrête actuellement l'accumulation des objets (16) déjà accumulés sur le dispositif de transport.

14. Procédé selon la revendication 13 destiné à l'accumulation d'objets (16) transportés sur un dispositif de transport (10), l'angle qui se forme entre le plan de soutien (18) et le plan de transport (15), outre le positionnement horizontal de la ligne de découpage (SL), pouvant aussi être ajusté à une valeur prédéfinie.
